# EUROPEAN PATENT APPLICATION

(11) **EP 4 803 945 A1**
(43) Date of publication of application: **09.09.2026**
(21) Application number: 26159773.6
(22) Date of filing: 20.02.2026
(51) Int. Cl.: G02B 6/44

(54) **AN OPTICAL FIBER SPLICE TRAY FOR AN OPTICAL TERMINATION BOX**

(30) Priority: 07.03.2025 IT 202500004737
(71) Applicant: Prysmian S.p.A., 20126 Milano (IT)
(72) Inventor: Abbiati, Fabio, 20126 Milano (IT)
(74) Representative: Perani & Partners S.p.A.

(57) **Abstract**

An optical fiber splice tray (1) for an optical termination box comprising: a base (10) configured to be connected to the optical termination box (100), the base (10) having a splicing area (11) for retaining optical fiber splices and a routing area (12) for passage of optical fibers from and towards the splicing area (11); the base (10) comprising a first base portion (20) and a second base portion (30); a side wall (40) projecting from the base (10) and surrounding the splicing area (11) and the routing area (12); a connecting member (50) associated to the first base portion (20) and defining a rotation axis (X-X) to pivotally connect the base (10) to the optical termination box (100); the second base portion (30) is bent with respect to the first base portion (20).

## Description

### Field of the invention

The present invention relates to the fields of equipment and components for the installation of optical cables and their optical splices. In particular, the present invention relates to the field of optical fiber splice trays and optical fiber splice closures and/or boxes.

### Background of the invention

Typically, optical fiber cables enter into an optical fiber splice closure which includes splice trays configured to retain optical splices. The splice trays usually are pivotally connected one another or to a central panel. Extra optical fibers are routed and/or coiled in specific areas on the splice trays or externally to the splicing trays. Splice trays have a limited area to hold optical splices as well as optical fibers. Moreover, the typical optical fiber splice tray can be higher to manage an higher number of splices and optical fibers. Such footprint and relative shape of the known optical fiber splice tray limit the available space in the box and on the trays.

WO99/67670 discloses a fiber optic splice closure includes at least one first splice organizer tray having one end pivotally connected to a base and extending in a medial portion of a housing; a mounting member pivotally connected to the base adjacent the at least one first splice organizer tray; and at least one second splice organizer tray pivotally connected to the mounting member on a side thereof opposite the at least one first splice organizer tray. The splice closure also preferably includes a slack storage tray connected to the base and positioned in the housing adjacent a side of the at least one first splice tray that is opposite the mounting member. The splice closure thus provides a compact, yet flexible, closure facilitating drops to a fiber optic ring network. The at least one first splice organizer tray is preferably pivotal about a first axis, and the at least one second splice organizer tray is also preferably pivotal about a second axis generally parallel to the first axis. In addition, the housing may have a generally cylindrical shape defining a longitudinal axis generally transverse to the first and second axes. The mounting member is preferably pivotal about a third axis parallel to the first and second axes. At least one optical fiber may be preinstalled between first and second splice trays.

US11435541 B2 discloses a fiber management system for managing and distributing optical fibers which comprises at least one supporting element, at least one splice tray pivotally mounted on the supporting element around a pivot axis, distributing elements for routing incoming fiber modules toward the splice tray and for routing outgoing fiber modules away from the splice tray, the distributing elements being oriented along respective routing directions transverse to the pivot axis. At least one guiding channel is provided on the supporting element for guiding at least the incoming fiber modules toward the splice tray along a direction substantially parallel to the pivot axis, and a retention block acts into the guiding channel between a plurality of retention positions wherein each retention position of the retention block defines a respective passageway for the incoming fiber modules.

The above-mentioned optical fiber splice trays have a flat shape which does not optimize the available space in the box and on the tray.

### Summary of the invention

The applicant has tackled the problem of providing an optical fiber splice tray for an optical termination box to improve the available space both in an optical termination box and on optical fiber splice tray and to increase the capacity of joint closures such that the high fiber count cables can be spliced.

The Applicant has found that an optical fiber splice tray with a base comprising a first base portion and a second base portion wherein the second base portion is bent with respect to the first base portion, improves the available space in the optical termination box as well as on the base and increases the capacity of joint closures such that the high fiber count cables can be spliced.

Therefore, the present invention relates to an optical fiber splice tray for an optical termination box comprising a base configured to be connected to the optical termination box, the base having a splicing area for retaining optical fiber splices and a routing area for passage of optical fibers from and towards the splicing area, the base comprising a first base portion and a second base portion; a side wall projecting from the base and surrounding the splicing area and the routing area; a connecting member associated to the first base portion and defining a rotation axis to pivotally connect the base to the optical termination box. The second base portion is bent with respect to the first base portion.

According to one embodiment, the first base portion is proximate to the rotation axis and the second base portion is distal from the rotation axis.

According to one embodiment, the first base portion extends along a first direction perpendicular to the rotation axis between a connecting portion at the connecting member and a bending portion. The second base portion extends along a second direction inclined with respect to the first direction between the bending portion and an end base portion.

According to one embodiment, the bending portion defines a bending axis parallel to the rotation axis, the second base portion being bent around the bending axis.

According to one embodiment, the bending portion comprises an inclination area having an increasing inclination between the first base portion and the second base portion, the second base portion 30 being bent with respect to the first base 20 portion due to the inclination area.

According to one embodiment, the side wall projects upwards from the first and second base portions. The second base portion is bent downwards with respect to the first base portion.

According to one embodiment, the second direction defines a bending angle with respect to the first direction in range of 5° and 15 °.

According to one embodiment, the side wall extends between a first wall portion and a second wall portion, the second wall portion being counter-shaped to the first and second base portions of an adjacent base connected to the optical termination box.

According to one embodiment, the side wall has a height tapering from the first base portion to the second base portion.

According to one embodiment, the splicing area is formed on the first base portion. The routing area is at least partly formed on the second base portion.

According to one embodiment, the splicing area is formed on the second base portion. The routing area is at least partly formed on the first base portion.

According to one embodiment, the splicing area and the routing area are distributed on the first and second base portions.

The present invention further relates to an optical termination box comprising a support base; at least one supporting element connected to the support base; one or more optical fiber splice trays according to the present invention, each optical fiber splice tray being pivotally connected to the supporting element around a rotation axis at the connecting member.

According to one embodiment, the optical fiber splice trays are arranged adjacently along the supporting element. The side wall of each optical fiber splice tray extends from a first wall portion to a second wall portion, the second wall portion of each optical fiber splice tray being counter-shaped to the base of an adjacent optical fiber splice tray.

### Brief description of the drawings

The present invention will now be described in more detail hereinafter with reference to the accompanying drawings, in which some embodiments of the invention are shown.
FIG. 1 is a perspective view of an optical fiber splice tray for an optical termination box according to one embodiment of the present invention;
FIG. 2 is a lateral view of an optical fiber splice tray for an optical termination box according to one embodiment of the present invention;
FIG. 3 is section view of an optical fiber splice tray for an optical termination box according to one embodiment of the present invention;
FIG. 4 is an upper view of an optical fiber splice tray for an optical termination box according to one embodiment of the present invention;
FIG. 5 is a lateral view of an optical termination box with an optical fiber splice tray according to one embodiment of the present invention.

### Detailed description

Figures shows an optical fiber splice tray 1 for an optical termination box 100.

For the purpose of the present invention, an optical cable is deemed to be any optical cable comprising one or more optical fibers, an outer sheath and, optionally, strength members.

According to one embodiment, the optical fiber splice tray 1 is configured to retain and manage the elements contained in high count fiber cables with flexribbons which can have a very large number of fibers: 3456 or even 6912 fibers grouped in flexribbon units (4/6/8/12 fibers). Such types of fiber cable are spliced as traditional ribbons with a mass fusion splice operation which uses for example MFSP (mass fusion splice protectors, 4-5mm OD) bigger than single fiber splice protector (1.3 or 2.6 mm OD). It is to be noted that an optical fiber splice tray 1 able to retain and manage such type of fiber cables in a high capacity has an height double with respect to the standard tray in order to triple the MFSP capacity of the tray.

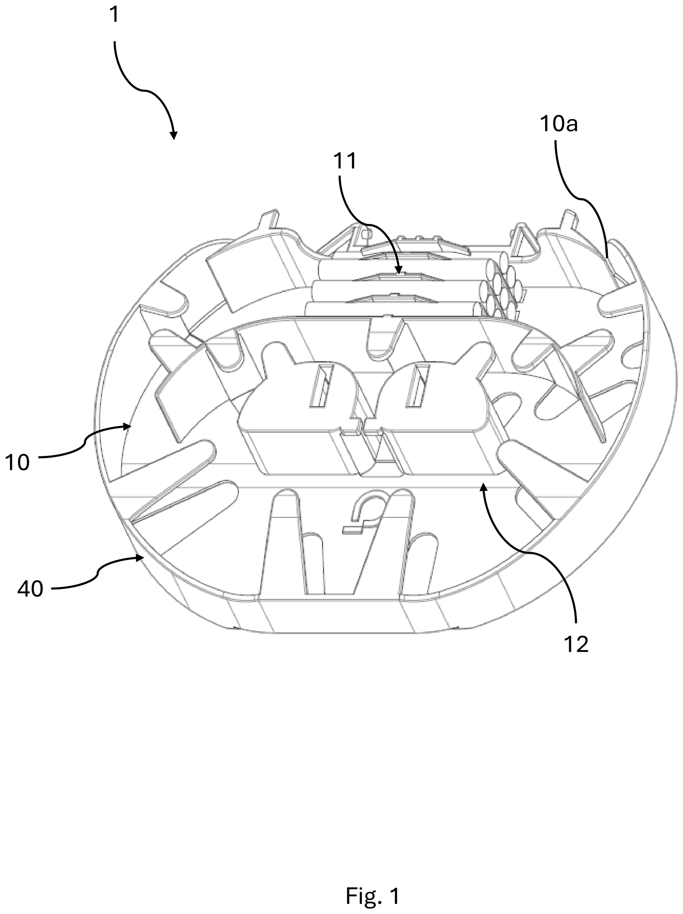

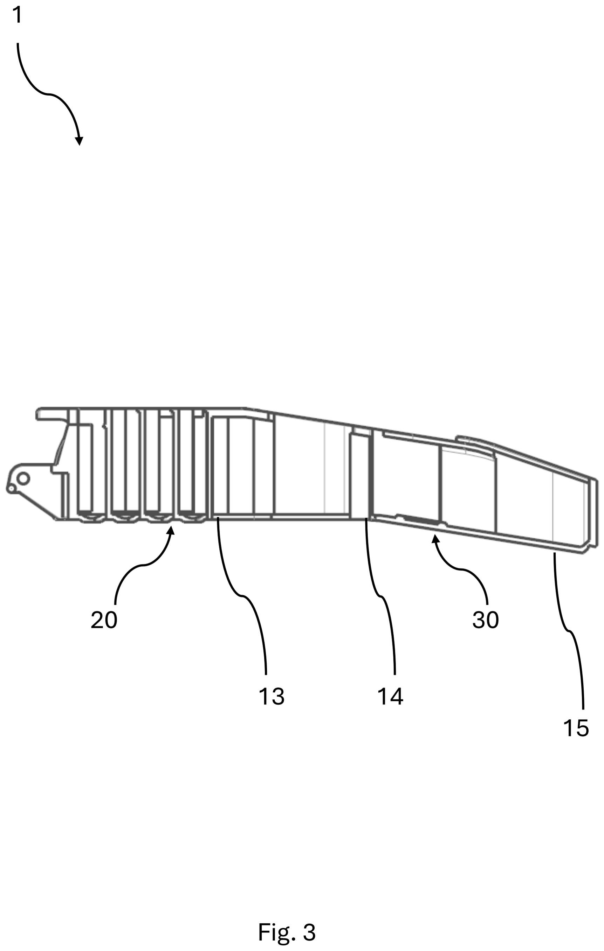

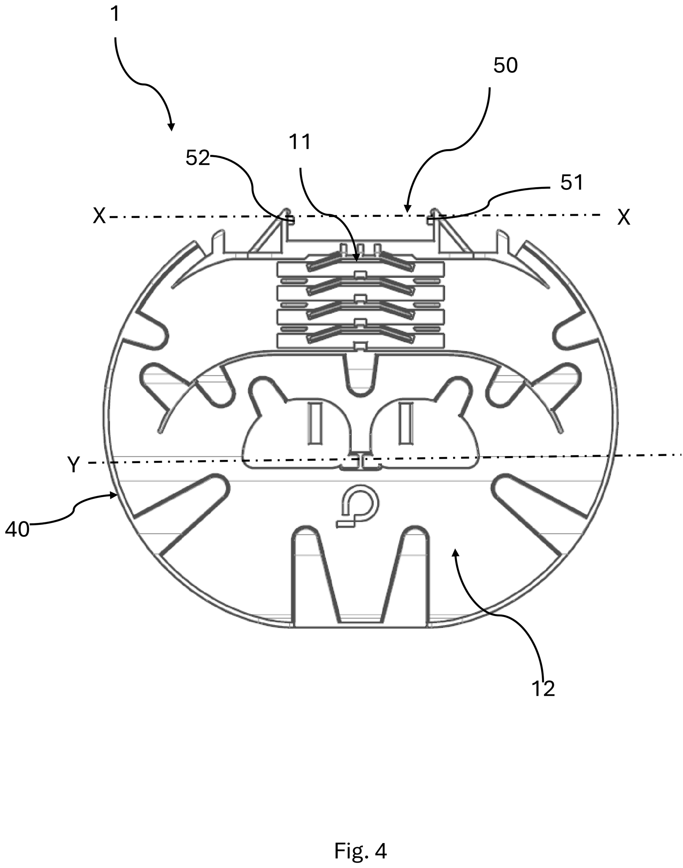

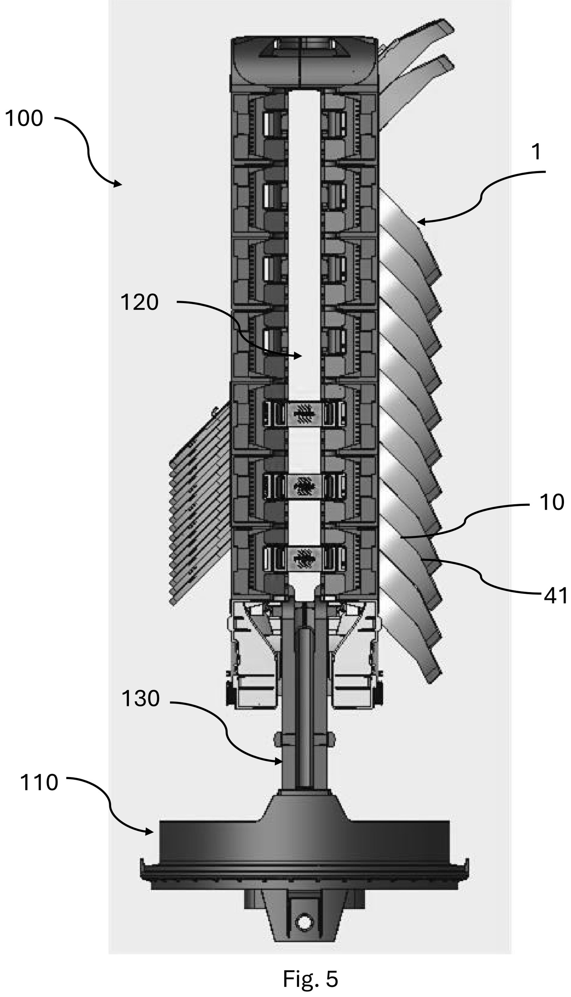

Figures 1-4 show an optical splice tray 1 for optical fibres and optical splices. Figure 5 shows such optical splice tray 1 associated to an optical termination box 100.

The optical fiber splice tray 1 comprises a base 10 configured to be connected to the optical termination box 100. The base 10 has a splicing area 11 for retaining optical fiber splices and a routing area 12 for passage of optical fibers from and towards the splicing area 11.

The base 10 comprises a first base portion 20 and a second base portion 30. Namely, the base 10 extends between the first base portion 20 and the second base portion 30.

According to one embodiment, the splicing area 11 is formed on the first base portion 20 while the routing area 12 is at least partly formed on the second base portion 30.

According to one alternative embodiment, the splicing area 11 is formed on the second base portion 30 while the routing area 12 is at least partly formed on the first base portion 20.

According to one alternative embodiment, the splicing area 11 and the routing area 12 are distributed on the first and second base portions 20, 30. Namely, the splicing area 11 and the routing area 12 can be formed at least in part on the first and second base portions 20, 30. The splicing area 11 can be formed at least in part in the first base portion 20 and at least in part in second base portion 30 spaced apart from the part formed in the first base portion 20. Accordingly, the routing area 12 is formed at least in part between the splicing area 11 formed in the first base portion 20 and the splicing area 11 formed in the second base portion 30. Namely, the routing area 12 can be formed at least in part in both first and second base portions 20, 30. Alternatively, the splicing area 11 is formed in the middle of the base 10 and the routing area 12 surrounds the splicing area 11. Accordingly, both the splicing area 11 and the routing area 12 can be formed on the first and second base portions 20, 30.

The optical fiber splice tray 1 comprises a side wall 40 surrounding the splicing area 11 and the routing area 12. Such side wall 40 can project from the base 10.

According to one embodiment, the side wall 40 extends between a first wall portion 41 and a second wall portion 42 for a wall height. Namely, the second wall portion 42 is counter-shaped to the first and second base portions 20, 30 of an adjacent base 10 connected to the optical termination box 100.

According to one embodiment, the base 10 comprises one or more openings 10a for receiving optical fibers from/to the splice tray 1. Specifically, the openings 10a are mutually spaced apart to reduce the bend radius of the optical fibers. It is to be noted that the openings 10a can be formed on a same side of side wall 40. In detail, the base 10 comprises routing paths on the routing area 12 and on the splicing area that address the optical fibers from the openings 10 to the splicing area 11.

The optical fiber splice tray 1 comprises a connecting member 50 associated to the first base portion 20 and defining a rotation axis X-X to pivotally connect the base 10 to the optical termination box 100. The connecting member 50 can project from the base 10 or from the side wall 40 to engage the optical termination box 100. According to one embodiment, connecting member 50 comprises first and second pins 51, 52 configured to engage a seat in the optical termination box 100

According to one embodiment, the first base portion 20 is proximate to the rotation axis X-X and the second base portion 30 is distal from the rotation axis X-X. Namely, the second base portion 30 is spaced apart from the rotation axis X-X by means of the first base portion 20.

The second base portion 30 is bent with respect to the first base portion 20. It is to be noted that the first base portion 20 is substantially flat and the second base portion 30 is bent with respect to the flat portion.

According to one embodiment, the first base portion 20 extends along a first direction A-A perpendicular to the rotation axis X-X between a connecting portion 13 at the connecting member 50 and a bending portion 14. In addition, the second base portion 30 extends along a second direction B-B inclined with respect to the first direction A-A between the bending portion 14 and an end base portion 15.

Namely, the bending portion 14 works as junction to bend the second base portion 30 along the second direction B-B from the first direction A-A.

According to one embodiment, the bending portion 14 defines a bending axis Y-Y parallel to the rotation axis X-X. Accordingly, the second base portion 30 is bent around the bending axis Y-Y.

According to an alternative embodiment combinable with the previous ones, the bending portion 14 comprises an inclination area having an increasing inclination between the first base portion 20 and the second base portion 30. Namely, the second base portion 30 is bent with respect to the first base portion due to the inclination area.

The inclination area can have one or more inclination sections adjacently connected and mutually bent. Each inclination section is bent around a relative inclination axis parallel to the rotation axis X-X from the first base portion 20 to the second base portion 30. Namely, each inclination section is bent with respect to the previous inclination section or to first base portion 20.

Alternatively, the inclination area can have a curved profile to bend the second base portion 30 with respect to the first base portion 20.

According to one embodiment, the side wall 40 projects upwards from the first and second base portions 20, 30. Namely, the side wall 40 projects from the first and second base portions 20, along an extension direction Z-Z substantially perpendicular to the first and second portions 20, 30 following the inclination of the base portions 20, 30. The side wall 40 projects from the base 10 where the splices are retained and the fibers are routed and managed.

The second base portion 30 is bent downwards with respect to the first base portion 20. Namely, the second base portion 30 is bent downwards with respect to an imaginary plane defined by the flat portion to the first base portion 20.

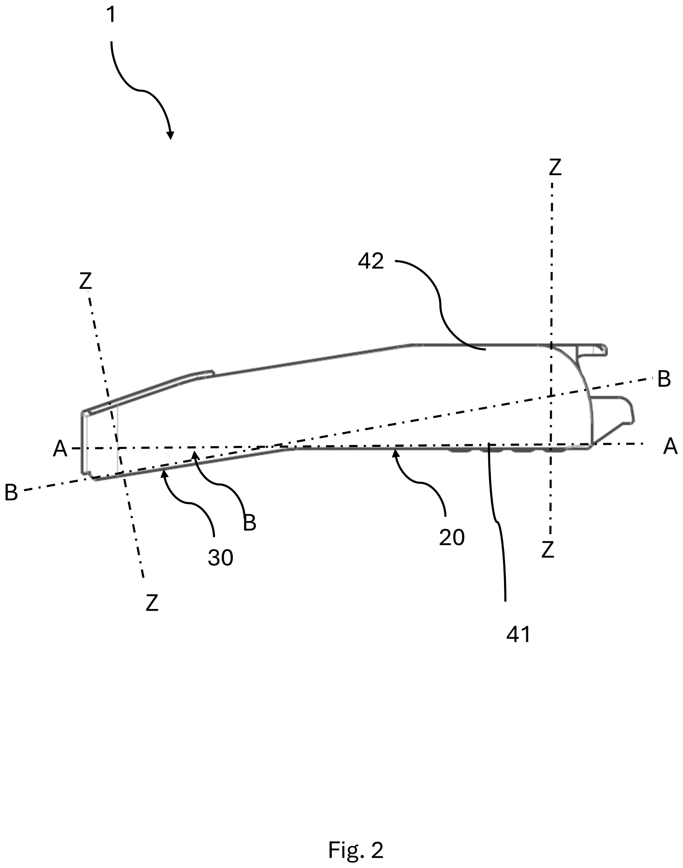

According to one embodiment, the second direction B-B defines a bending angle B with respect to the first direction A-A in range of 5° and 15°, as shown in figures 2.

According to one embodiment, the side wall 40 has a height tapering from the first base portion 20 to the second base portion 30. Namely, the side wall 40 is tapered from the first base portion to the second base portion reducing the relative height. In this way, the second wall portion 42 is counter-shaped to the base 10 of adjacent optical tray 1 which abuts against the side wall 40. It is to be noted that, the second wall portion 42 reproduced the bent of the base 10 to save further space between the optical trays 1.

It is further object of the present invention an optical termination box 100 shown in figure 5.

The optical termination box 100 comprises a support base 110 for receiving optical cables.

The optical termination box 100 comprises at least one supporting element 120 connected to the support base 110. According to one embodiment, the supporting element 120 can be directly connected to the support base 110 projecting from the support base 110. Alternatively, the optical termination box 100 comprises a connecting element 130 interposed between the supporting element 120 and the support base 110 and configured to connect the supporting element 120 to the support base 110. It is to be noted that the supporting element 120 and the connecting element 130 can be two distinct elements mutually connected as above reported or can be one-piece injection moulded element connected to the support base 110.

The optical termination box 100 comprises one or more optical fiber splice trays 1 according to the present invention. Each optical fiber splice tray 1 is pivotally connected to the supporting element 120 around a rotation axis X-X at the connecting member 50.

The supporting element 120 can comprise seats for receiving and retaining the connecting members 50 to allow the rotation of the optical fiber splice trays 1.

Specifically, each optical splice tray 1 can reversibly pass from a storage position to an operation position wherein the base 10 of each optical splice tray 1 is selectively accessible to an operator.

According to one embodiment, the optical fiber splice trays 1 are arranged adjacently along the supporting element 120. It is to be noted that the second wall portion 42 of each optical fiber splice tray 1 is counter-shaped to the base 10 of an adjacent optical fiber splice tray 1.

## Claims

1. An optical fiber splice tray (1) for an optical termination box comprising:
- a base (10) configured to be connected to the optical termination box (100), the base (10) having a splicing area (11) for retaining optical fiber splices and a routing area (12) for passage of optical fibers from and towards the splicing area (11); the base (10) comprising a first base portion (20) and a second base portion (30);
- a side wall (40) projecting from the base (10) and surrounding the splicing area (11) and the routing area (12);
- a connecting member (50) associated to the first base portion (20) and defining a rotation axis (X-X) to pivotally connect the base (10) to the optical termination box (100);
wherein
- the second base portion (30) is bent with respect to the first base portion (20).

2. The optical fiber splice tray (1) according to claim 1, wherein
- the first base portion (20) is proximate to the rotation axis (X-X) and the second base portion (30) is distal from the rotation axis (X-X).

3. The optical fiber splice tray (1) according to claim 1 or 2, wherein:
- the first base portion (20) extends along a first direction (A-A) perpendicular to the rotation axis (X-X) between a connecting portion (13) at the connecting member (50) and a bending portion (14);
- the second base portion (30) extends along a second direction (B-B) inclined with respect to the first direction (A-A) between the bending portion (14) and an end base portion (15).

4. The optical fiber splice tray (1) according to claim 3, wherein the bending portion (14) defines a bending axis (Y-Y) parallel to the rotation axis (X-X), the second base portion (30) being bent around the bending axis (Y-Y)

5. The optical fiber splice tray (1) according to claim 3, wherein the bending portion (14) comprises an inclination area having an increasing inclination between the first base portion (20) and the second base portion (30), the second base portion (30) being bent with respect to the first base (20) portion due to the inclination area.

6. The optical fiber splice tray (1) according to any claims 1 to 5, wherein:
- the side wall (40) projects upwards from the first and second base portions (20, 30);
- the second base portion (30) is bent downwards with respect to the first base portion (20).

7. The optical fiber splice tray (1) according to any claims 3 to 6, wherein
- the second direction (B-B) defines a bending angle (B) with respect to the first direction (A-A) in range of 5° and 15°.

8. The optical fiber splice tray (1) according to any claims 1 to 7, wherein:
- the side wall (40) extends between a first wall portion (41) and a second wall portion (42), the second wall portion (42) being counter-shaped to the first and second base portions (20, 30) of an adjacent base (10) connected to the optical termination box (100).

9. The optical fiber splice tray (1) according to claim 8, wherein
- the side wall (40) has a height tapering from the first base portion (20) to the second base portion (30).

10. The optical fiber splice tray (1) according to any claims 1 to 9, wherein
- the splicing area (11) is formed on the first base portion (20);
- the routing area (12) is at least partly formed on the second base portion (30).

11. The optical fiber splice tray (1) according to any claims 1 to 9, wherein
- the splicing area (11) is formed on the second base portion (30);
- the routing area (12) is at least partly formed on the first base portion (20).

12. The optical fiber splice tray (1) according to any claims 1 to 9, wherein
- the splicing area (11) and the routing area (12) are distributed on the first and second base portions (20, 30).

13. An optical termination box (100) comprising:
- a support base (110);
- at least one supporting element (120) connected to the support base (110);
- one or more optical fiber splice trays (1) according to any claims 1 to 12, each optical fiber splice tray (1) being pivotally connected to the supporting element (120) around a rotation axis (X-X) at the connecting member (50).

14. The optical termination box (100) according to claim 13, wherein
- the optical fiber splice trays (1) are arranged adjacently along the supporting element (120),
- the side wall (40) of each optical fiber splice tray (1) extends from a first wall portion (41) to a second wall portion (42), the second wall portion (42) of each optical fiber splice tray (1) being counter-shaped to the base (10) of an adjacent optical fiber splice tray (1).
